# EUROPÄISCHE PATENTSCHRIFT

(11) **EP 3 973 598 B1**
(45) Veröffentlichungstag und Bekanntmachung des Hinweises auf die Patenterteilung: **26.07.2023**
(21) Anmeldenummer: 20724472.4
(22) Anmeldetag: 06.05.2020
(51) Int. Cl.: H01R 13/66, H01R 13/11, H01R 13/18, G01K 1/14, B60L 53/16

(54) **STECKVERBINDERTEIL MIT EINER AN KONTAKTLAMELLEN EINES KONTAKTELEMENTS ANGEORDNETEN SENSOREINRICHTUNG**
PLUG CONNECTOR PART HAVING A SENSOR DEVICE ARRANGED ON CONTACT LAMELLAE OF A CONTACT ELEMENT
PIÈCE DE CONNECTEUR MUNIE D'UN DISPOSITIF DE CAPTEUR DISPOSÉ AU NIVEAU DE LAMELLES DE CONTACT D'UN ÉLÉMENT DE CONTACT

(30) Priorität: 22.05.2019 DE 102019113591
(43) Veröffentlichungstag der Anmeldung: 30.03.2022
(73) Patentinhaber: Phoenix Contact e-Mobility GmbH, 32816 Schieder-Schwalenberg (DE)
(72) Erfinder: FÜHRER, Thomas, 32825 Blomberg (DE)
(86) Internationale Anmeldenummer: PCT/EP2020/062496
(87) Internationale Veröffentlichungsnummer: WO 2020/233986

(56) Entgegenhaltungen:
- WO-A1-02/13330
- WO-A1-2018/197247
- DE-A1-102016 001 572
- DE-A1-102016 001 572
- DE-B3-102015 115 657

## Beschreibung

Die Erfindung betrifft ein Steckverbinderteil zum Aufladen eines elektrisch betriebenen Fahrzeugs nach dem Oberbegriff des Anspruchs 1.

Ein derartiges Steckverbinderteil kann beispielsweise als Ladestecker zum Aufladen eines Elektrofahrzeugs ausgebildet und beispielsweise an einem mit einer Ladestation verbundenen Ladekabel angeordnet sein. Ein solches Steckverbinderteil kann aber auch eine Ladebuchse beispielsweise auf Seiten eines Elektrofahrzeugs verwirklichen.

Ein derartiges Steckverbinderteil umfasst zumindest ein elektrisches Kontaktelement, das entlang einer Steckrichtung mit einem Gegenkontaktelement eines Gegensteckverbinderteils verbindbar ist und eine Mehrzahl von um eine Stecköffnung zum Aufnehmen des Gegenkontaktelements gruppierten Kontaktlamellen aufweist. An den Kontaktlamellen ist ein Federelement angeordnet, das die Kontaktlamellen zum Bereitstellen einer mechanischen Vorspannung umfänglich um die Steckrichtung zumindest abschnittsweise umgreift und auch als Überfeder bezeichnet wird.

Das Kontaktelement ist beispielsweise mit einer Lastleitung verbunden und dient, bei hergestellter Verbindung, beispielsweise zum Übertragen eines Laststroms zwischen dem Steckverbinderteil und einem zugeordneten Gegensteckverbinderteil. Weil im Rahmen eines Ladevorgangs zum Aufladen eines Elektrofahrzeugs Ladeströme mit großer Stromstärke, beispielsweise 500 A oder gar darüber, fließen können, kann es bei einem Ladevorgang zu Erwärmungen im Ladesystem, insbesondere auch am Steckverbinderteil kommen.

Zu Erwärmungen kann es hierbei insbesondere auch im Bereich von Kontaktelementen des Steckverbinderteils kommen. An Kontaktelementen können Verschmutzungen oder Beschädigungen zu einer Erhöhung des elektrischen Übergangswiderstands und damit zu einer größeren Verlustwärme im Betrieb führen, was im Rahmen einer Temperaturüberwachung des Steckverbinderteils detektiert werden sollte, um eine Beschädigung am Steckverbinderteil aufgrund einer übermäßigen Erwärmung nach Möglichkeit zu verhindern.

Eine Temperaturüberwachung an Kontaktelementen ist hierbei nicht ohne weiteres auf indirekte Weise durch Messung an von den Kontaktelementen entfernten Bauteilen, zum Beispiel einer Ladeleitung, möglich. Bei einem Ladesystem kann beispielsweise an einer Ladeleitung und auch an Baugruppen des Steckverbinderteils selbst eine Flüssigkeitskühlung vorgesehen sein, die für eine Kühlung im Betrieb sorgt, dabei aber sich nicht bis hin zu den Kontaktlamellen der Kontaktelemente erstreckt und somit keine unmittelbare Kühlung an den Kontaktlamellen bereitstellt. Eine Temperaturmessung an gekühlten Bauelementen, zum Beispiel einer Ladeleitung, ermöglicht keine zuverlässige Aussage über eine unter Umständen auftretende Erwärmung an den Kontaktelementen, insbesondere den Kontaktlamellen eines Kontaktelements.

Es besteht somit ein Bedürfnis nach einem Steckverbinderteil, das eine zuverlässige Temperaturüberwachung durch Messen der Temperatur unmittelbar an solchen Kontaktelementen ermöglicht, die im Betrieb Lastströme führen und an denen es somit im Betrieb zu einer Erwärmung kommen kann.

Hierbei ist zu beachten, dass der Bauraum in einem Steckverbinderteil insbesondere im Bereich der Kontaktelemente üblicherweise begrenzt ist, sodass eine Sensoreinrichtung zum Erfassen der Temperatur einen geringen Bauraumbedarf aufweisen soll.

Bei einem aus der DE 10 2015 115 657 B3 bekannten elektrischen Kontaktelement ist eine optische Faser in eine Nut an dem Kontaktelement eingelegt. Die optische Faser ist als Sensor ausgebildet und kann beispielsweise zur Temperaturmessung dienen.

Bei einem aus der DE 10 2016 001 572 A1 bekannten Ladeverbinder ist ein Sensor unter Verwendung eines Schrumpfschlauchs an einem Anschlusspassstück angeordnet.

Die WO 02/13330 A1 beschreibt einen Steckverbinder, der Kontakte aufweist, die buchsen- oder hülsenförmig zur Aufnahme von Kontaktstiften ausgebildet sind, wobei an zumindest einem der Kontakte ein Temperaturfühler angeordnet ist.

Aus der WO 2018/197247 A1 ist ein Steckverbinderteil zum Verbinden mit einem Gegensteckverbinderteil bekannt, welches ein Gehäuseteil, ein an dem Gehäuseteil angeordnetes elektrisches Kontaktelement zum Herstellen eines elektrischen Kontakts mit dem Gegensteckverbinderteil und eine Temperarturüberwachungseinrichtung mit einer Sensoreinrichtung zum Detektieren einer Erwärmung an dem Kontaktelement aufweist. Die Temperaturüberwachungseinrichtung weist ein flächig entlang einer Ebene erstrecktes Trägerelement auf, an dem die Sensoreinrichtung angeordnet ist und das zwei Clipsarme aufweist, über die das Trägerelement auf das Kontaktelement aufgeclipst ist.

Aufgabe der vorliegenden Erfindung ist es, ein Steckverbinderteil zum Aufladen eines elektrisch betriebenen Fahrzeugs zur Verfügung zu stellen, das in konstruktiv einfacher Weise eine Erfassung einer Messgröße, insbesondere der Temperatur, an Kontaktlamellen eines Kontaktelements ermöglicht, bei effizienter Verwendung des zur Verfügung stehenden Bauraums.

Diese Aufgabe wird durch einen Gegenstand mit den Merkmalen des Anspruchs 1 gelöst.

Demnach weist das Steckverbinderteil eine Sensoreinrichtung zum Erfassen einer Messgröße auf, die an zumindest einer der Kontaktlamellen angeordnet und durch das Federelement an der zumindest einen der Kontaktlamellen gehalten ist.

Die Sensoreinrichtung kann insbesondere zum Erfassen der Temperatur ausgebildet sein. Die Sensoreinrichtung kann beispielsweise ein Sensorelement in Form eines temperaturabhängigen Widerstands aufweisen, sodass anhand einer Widerstandsänderung ein Rückschluss auf eine Temperaturänderung an den Kontaktlamellen gezogen werden kann.

Die Sensoreinrichtung ist an zumindest einer der Kontaktlamellen angeordnet und ist dabei über das die Kontaktlamellen umgreifende Federelement an den Kontaktlamellen fixiert. Das auch als Überfeder bezeichnete Federelement dient zum einen zum Bereitstellen einer elastischen Vorspannung an den Kontaktlamellen, insbesondere um an den Kontaktlamellen in einem mit einem zugeordneten Gegenkontaktelement verbundenen Zustand eine (hinreichende) Kontaktnormalkraft zwischen den Kontaktlamellen und dem zum Beispiel als Kontaktstift ausgebildeten Gegenkontaktelement einzustellen. Zum anderen dient das Federelement als Fixierung für die Sensoreinrichtung an den Kontaktlamellen. Weil das zur Bereitstellung der Vorspannkraft an den Kontaktlamellen ohnehin vorhandene Federelement auch zur Fixierung der Sensoreinrichtung verwendet wird, kann der für die Sensoreinrichtung erforderliche Bauraum gering sein, unter Reduzierung der Teileanzahl.

Dadurch, dass die Sensoreinrichtung unmittelbar an den Kontaktlamellen angeordnet ist, kann die Sensoreinrichtung eine Messgröße, insbesondere die Temperatur, unmittelbar an den Kontaktlamellen aufnehmen und somit eine Temperaturüberwachung an den Kontaktlamellen ermöglichen. Dies ermöglicht, einen etwaigen Temperaturanstieg an den Kontaktlamellen im wesentlichen verzögerungsfrei und exakt zu erkennen, sodass in einem Fehlerfall Gegenmaßnahmen eingeleitet werden können, zum Beispiel indem ein Ladevorgang unterbrochen oder modifiziert wird. Eine Temperaturüberwachung wird auf diese Weise insbesondere im Bereich von Kontaktpunkten möglich, an denen die Kontaktlamellen mit dem zugeordneten Gegenkontaktelement elektrisch kontaktieren.

Das Federelement dient somit zur Fixierung der Sensoreinrichtung an den Kontaktlamellen. Die Sensoreinrichtung kann hierbei an einer einzelnen Kontaktlamelle anliegen. Die Sensoreinrichtung kann aber auch an mehreren Kontaktlamellen gleichzeitig anliegen.

Das Federelement stellt, in einer Ausgestaltung, eine radial zur Steckrichtung nach innen gerichtete Vorspannkraft zur Verfügung, die auf die Sensoreinrichtung wirkt und die Sensoreinrichtung somit in Anlage mit der jeweils zugeordneten Kontaktlamelle drückt. Über das Federelement wird somit sichergestellt, dass die Sensoreinrichtung in Anlage mit der zugeordneten Kontaktlamelle ist und somit eine Temperatur an der zugeordneten Kontaktlamelle aufnehmen kann.

Das sich umfänglich um die Kontaktlamellen des Kontaktelements erstreckende Federelement kann beispielsweise eine oder mehrere Windungen aufweisen und zum Beispiel aus einem Federdraht geformt sein. Das Federelement kann beispielsweise in einer an den Kontaktlamellen geformten, um die Steckrichtung an den Kontaktlamellen umfänglich umlaufenden Nut einliegen und dadurch die Kontaktlamellen so umgreifen, dass an den Kontaktlamellen eine radial nach innen gerichtete Vorspannkraft zum Einstellen einer Kontaktkraft beim steckenden Verbinden mit einem zugeordneten Gegenkontaktelement bereitgestellt wird. Die Nut kann beispielsweise im Bereich von freien Enden der Kontaktlamellen geformt sein. Die Kontaktlamellen können beispielsweise entlang der Steckrichtung von einem Schaftabschnitt des Kontaktelements vorstehen und tragen an ihren freien Enden das Federelement, sodass das Federelement im Bereich der freien Enden eine radial nach innen gerichtete, einem Aufweiten der Kontaktlamellen entgegenwirkende Vorspannkraft bereitstellt.

In einer Ausgestaltung weist das Federelement einen von den Windungen erstreckten Federarm und ein an den Federarm anschließendes Federende auf. Der Federarm kann sich beispielsweise entlang der Steckrichtung von den umfänglich um die Kontaktlamellen herum gewundenen Windungen erstrecken und trägt an einem von den Windungen abliegenden Ende das Federende, das beispielsweise um näherungsweise 90° zu dem Federarm abgewinkelt sein kann und auf die Sensoreinrichtung einwirkt, um die Sensoreinrichtung an den Kontaktlamellen zu fixieren. Das Federende kann hierbei beispielsweise gekrümmt sein, um auf die Sensoreinrichtung einzuwirken und eine insbesondere radial nach innen gerichtete Vorspannkraft auf die Sensoreinrichtung auszuüben.

In einer Ausgestaltung weist eine der Kontaktlamellen eine Aussparung auf, die längs entlang der Steckrichtung erstreckt ist und in der der Federarm einliegt. Die Aussparung bildet eine Drehsicherung für das Federelement an den Kontaktlamellen aus und bewirkt insbesondere, dass der Federarm nicht umfänglich verrutschen kann und somit die Fixierung der Sensoreinrichtung durch das an dem Federarm angeordnete Federende gesichert ist. Die Aussparung kann beispielsweise als Einfräsung außenseitig an einer der Kontaktlamellen geformt sein, wobei die Aussparung auch zwischen zwei benachbarten Kontaktlamellen geformt sein und sich somit an den zwei benachbarten Kontaktlamellen erstrecken kann.

In einer Ausgestaltung ist an einer Kontaktlamelle, an der die Sensoreinrichtung angeordnet ist, eine entlang der Steckrichtung erstreckte Aufnahmenut geformt, in der die Sensoreinrichtung einliegt. Die Aufnahmenut ist außenseitig der zugeordneten Kontaktlamelle geformt und nimmt die Sensoreinrichtung auf, sodass die Sensoreinrichtung zumindest teilweise in der zugeordneten Kontaktlamelle versenkt ist und sich der für die Sensoreinrichtung zusätzlich erforderliche Bauraumbedarf weiter reduziert. Durch Aufnahme in der Aufnahmenut ist die Sensoreinrichtung zudem an definierter Position an der zugeordneten Kontaktlamelle aufgenommen und insbesondere in Umfangsrichtung an der Kontaktlamelle gesichert, wobei über das Federelement auch eine insbesondere radiale Sicherung der Sensoreinrichtung erfolgt und die Sensoreinrichtung somit an der Kontaktlamelle gehalten ist.

In einer Ausgestaltung weist die Sensoreinrichtung ein Sensorelement und ein das Sensorelement einfassendes, elektrisch isolierendes Gehäuse auf. Das Sensorelement kann beispielsweise durch einen temperaturabhängigen Widerstand ausgebildet sein, wobei ein solcher Widerstand einen negativen Temperaturkoeffizienten (NTC-Widerstand) oder einen positiven Temperaturkoeffizienten (PTC-Widerstand) aufweisen kann. Das Gehäuse fasst das Sensorelement ein und kann beispielsweise durch einen Folienschlauch mit kleiner Wandungsstärke, zum Beispiel mit einer Wandungsstärke zwischen 0,01 mm und 0,1 mm, gebildet sein. Das Gehäuse ist elektrisch isolierend und zudem hinreichend spannungsfest, sodass auch eine große an dem Kontaktelement anliegende Spannung, zum Beispiel bis hin zu 1000 V, nicht zu einem Spannungsüberschlag auf das Sensorelement führen kann. Das Gehäuse ist wärmeleitend, sodass eine an der zugeordneten Kontaktlamelle auftretende Erwärmung über das Sensorelement aufgenommen und detektiert werden kann.

In einer Ausgestaltung weist die Sensoreinrichtung ein Zuleitungselement auf, das beispielsweise durch eine flexible Leiterplatte gebildet ist und an der das Sensorelement angeordnet ist. Das Zuleitungselement kann ein oder mehrere Zuleitungen für das Sensorelement aufweisen und ist an einem Ende aus dem Gehäuse herausgeführt, um beispielsweise innerhalb des Steckverbinderteils mit einer übergeordneten elektrischen oder elektronischen Baugruppe, zum Beispiel einem Signalkontakt, elektrisch zu kontaktieren, um so eine Temperaturüberwachung an dem Kontaktelement zu ermöglichen.

Das Zuleitungselement kann sich zum Beispiel streifenförmig erstrecken und trägt das Sensorelement. Das Gehäuse fasst hierbei das Sensorelement und das Zuleitungselement ein, wobei das Zuleitungselement entlang der Steckrichtung aus dem Gehäuse herausgeführt sein kann, um das Sensorelement mit einer übergeordneten elektrischen Baugruppe zu verbinden.

In einer Ausgestaltung weist die Sensoreinrichtung ein Trägerelement auf, das ebenfalls in dem Gehäuse eingefasst und an einer dem Sensorelement abgewandten Seite des Zuleitungselements angeordnet ist. Das Trägerelement dient zur mechanischen Stabilisierung der Sensoreinrichtung insbesondere im Bereich des Sensorelements, um eine durch das Federelement bereitgestellte Vorspannkraft auf das Sensorelement zu übertragen und eine Vorspannung an dem Sensorelement radial in Richtung der zugeordneten Kontaktlamelle zu bewirken.

In einer Ausgestaltung weist das Kontaktelement ein Fixierungselement, zum Beispiel in Form eines elastisch verformbaren Ringelements, zum Beispiel eines Elastomerrings, auf, das an den Kontaktlamellen derart angeordnet ist, dass das Fixierungselement die Kontaktlamellen umfänglich umgreift. Das Fixierungselement kann zur Fixierung des Zuleitungselements an den Kontaktlamellen dienen und liegt beispielsweise in einer an den Kontaktlamellen geformten, um die Steckrichtung umlaufenden Vertiefung ein. Die Vertiefung ist dabei beispielsweise an Enden der Kontaktlamellen geformt, die den freien Enden abgewandt sind und an denen die Kontaktlamellen beispielsweise mit einem massiven Schaftabschnitt des Kontaktelements verbunden sind.

Das Fixierungselement kann eine Fixierung des Zuleitungselements dadurch bewirken, dass das Fixierungselement das zum Beispiel durch eine flexible Leiterplatte ausgebildete Zuleitungselement umgreift und somit an den Kontaktlamellen hält. Das Zuleitungselement kann beispielsweise einen gekrümmten Abschnitt aufweisen, der in der an den Kontaktlamellen geformten, um die Steckrichtung umlaufenden Vertiefung einliegt.

Ein Steckverbinderteil der beschriebenen Art kann beispielsweise einen Ladestecker eines Ladesystems zum Aufladen eines Elektrofahrzeugs verwirklichen. Ein solches Steckverbinderteil kann beispielsweise an einem Ladekabel angeordnet und über das Ladekabel mit einer Ladestation verbunden sein. Das Steckverbinderteil kann beispielsweise mit einem zugeordneten Gegensteckverbinderteil in Form einer Ladebuchse auf Seiten eines Elektrofahrzeugs steckend verbunden werden.

Das Steckverbinderteil kann aber auch eine Ladebuchse zum Beispiel auf Seiten eines Elektrofahrzeugs verwirklichen.

Denkbar und möglich ist zudem, ein Steckverbinderteil in anderer Anwendung zum Übertragen von insbesondere großen Strömen einzusetzen.

Der der Erfindung zugrunde liegende Gedanke soll nachfolgend anhand der in den Figuren dargestellten Ausführungsbeispiele näher erläutert werden. Es zeigen:
- Fig.1: eine schematische Darstellung eines elektrisch betriebenen Fahrzeugs (Elektrofahrzeug) mit einem Ladekabel und einer Ladestation zum Aufladen;
- Fig. 2: eine Ansicht eines Ausführungsbeispiels eines Steckverbinderteils in Form eines Ladesteckers zum Aufladen eines Elektrofahrzeugs;
- Fig. 3: eine teilweise freigeschnittene Seitenansicht des Steckverbinderteils gemäß Fig. 2;
- Fig. 4: eine vergrößerte Darstellung im Ausschnitt A gemäß Fig. 3;
- Fig. 5: eine gesonderte Ansicht eines Kontaktelements des Steckverbinderteils mit einer an dem Kontaktelement angeordneten Sensoreinrichtung;
- Fig. 6: eine Seitenansicht des Kontaktelements;
- Fig. 7: eine Explosionsansicht des Kontaktelements;
- Fig. 8: eine Vorderansicht des Kontaktelements;
- Fig. 9: eine vergrößerte Darstellung im Ausschnitt B gemäß Fig. 8;
- Fig. 10: eine gesonderte Ansicht eines Federelements, das an Kontaktlamellen des Kontaktelements angeordnet ist;
- Fig. 11: eine vergrößerte Ansicht des Kontaktelements im Bereich von freien Enden der Kontaktlamellen, ohne ein an den Kontaktlamellen angeordnetes Federelement;
- Fig. 12: eine Ansicht der Kontaktlamellen im Bereich ihrer freien Enden, mit einem an den Kontaktlamellen angeordneten Federelement und einer Sensoreinrichtung; und
- Fig. 13: eine Schnittansicht eines an den Kontaktlamellen angeordneten Fixierungselements zur Fixierung eines Zuleitungselements.

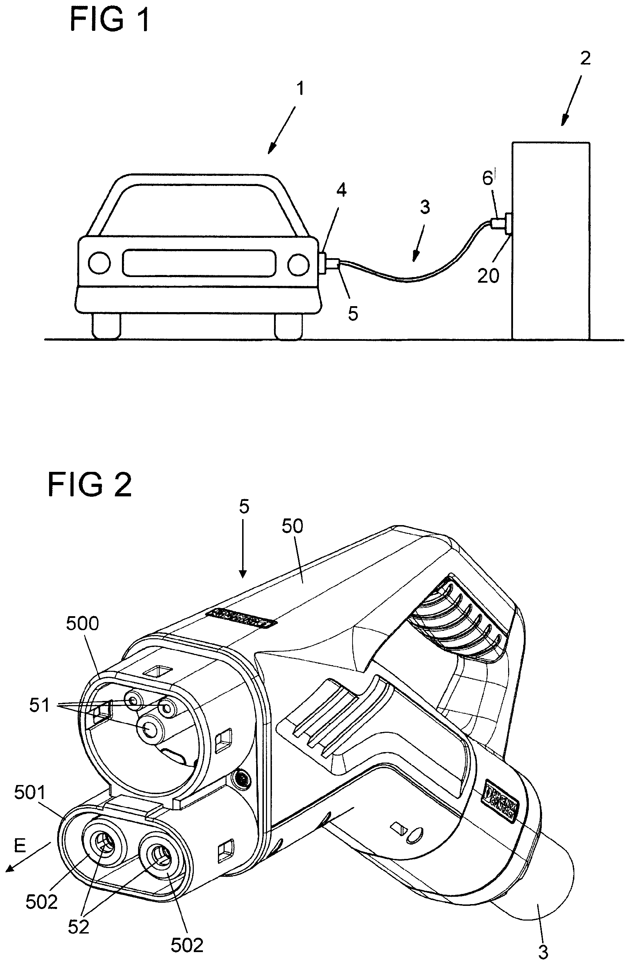

Fig. 1 zeigt in einer schematischen Ansicht ein Fahrzeug 1 in Form eines elektromotorisch angetriebenen Fahrzeugs (bezeichnet auch als Elektrofahrzeug). Das Elektrofahrzeug 1 verfügt über elektrisch aufladbare Batterien, über die ein Elektromotor zum Fortbewegen des Fahrzeugs 1 elektrisch versorgt werden kann.

Um die Batterien des Fahrzeugs 1 aufzuladen, kann das Fahrzeug 1 über ein Ladekabel 3 an eine Ladestation 2 angeschlossen werden. Das Ladekabel 3 kann hierzu mit einem Steckverbinderteil 5 in Form eines Ladesteckers an einem Ende in ein zugeordnetes Gegensteckverbinderteil 4 in Form einer Ladebuchse des Fahrzeugs 1 eingesteckt werden und steht an seinem anderen Ende mit der Ladestation 2 in Verbindung, beispielsweise indem ein anderer Ladestecker 6 mit einem Gegensteckverbinderteil 20 in Form einer Ladebuchse an der Ladestation 2 elektrisch verbunden ist. Über das Ladekabel 3 werden Ladeströme mit vergleichsweise großer Stromstärke hin zum Fahrzeug 1 übertragen.

Fig. 2 zeigt ein Ausführungsbeispiel eines Steckverbinderteils 5,das an einem Ladekabel 3 angeordnet ist und beispielsweise in ein zugeordnetes Gegensteckverbinderteil 4 in Form einer Ladebuchse auf Seiten eines Fahrzeugs 1 eingesteckt werden kann. Das Steckverbinderteil 5 weist ein Gehäuse 50 mit daran geformten Steckabschnitten 500, 501 auf, im Bereich derer Kontaktelemente 51, 52 zum steckenden Verbinden mit zugeordneten Gegenkontaktelementen des Gegensteckverbinderteils 4 angeordnet sind.

Bei dem dargestellten Ausführungsbeispiel dienen Kontaktelemente 51 im Bereich eines oberen Steckabschnitts 500 als Signalkontakte zum Übertragen von Steuersignalen. Kontaktelemente 52 an einem unteren Steckabschnitt 501 dienen demgegenüber zum Übertragen eines Ladestroms in Form eines Gleichstroms, um Fahrzeugbatterien des Fahrzeugs 1 aufzuladen.

Weil zu übertragende Lastströme hohe Stromstärken (beispielsweise 500 A oder gar darüber) aufweisen können, kann es im Betrieb des Ladesystems zu Erwärmungen an den unterschiedlichen Komponenten des Ladesystems kommen, beispielsweise am Ladekabel 3 und am Steckverbinderteil 5. Um solchen Erwärmungen entgegenzuwirken, kann beispielsweise am Ladekabel 3 und am Steckverbinderteil 5 eine aktive Kühlung bereitgestellt werden, zum Beispiel in Form einer Flüssigkeitskühlung, die Wärme am Ladekabel 3 und am Steckverbinderteil 5 aufnehmen und abführen kann, sodass es zu keiner übermäßigen Erwärmung am Ladekabel 3 und am Steckverbinderteil 5 kommt.

Eine solche Kühlung kann sich hierbei bis zu den Lastkontaktelementen 52 erstrecken, wobei aber Kontaktlamellen der buchsenförmig ausgebildeten Kontaktelemente 52, die in Steckdomen 502 innerhalb des unteren Steckabschnitts 501 einliegen, nicht unmittelbar gekühlt werden können.

Insbesondere an den Kontaktelementen 52 kann es im Betrieb jedoch zu Erwärmungen kommen. Während ein elektrischer Widerstand bei normalen Betriebsbedingungen zwischen den Kontaktelementen 52 des Steckverbinderteils 5 und zugeordneten Gegenkontaktelementen des Gegensteckverbinderteils 4 üblicherweise klein ist, kann ein solcher elektrischer Widerstand zum Beispiel bei Verschmutzungen oder Beschädigungen an den Kontaktelementen 52 oder den Gegenkontaktelementen erheblich ansteigen, was zu einer drastisch gesteigerten Erwärmung an den Kontaktelementen 52 führen kann.

Es besteht somit ein Bedürfnis für eine Temperaturüberwachung unmittelbar im Bereich der Kontaktlamellen der Kontaktelemente 52, wobei der im Bereich der Kontaktlamellen bereitstehende Bauraum innerhalb der Steckdome 502 klein ist und somit nur ein geringer Bauraum für eine solche Temperaturüberwachung zur Verfügung steht.

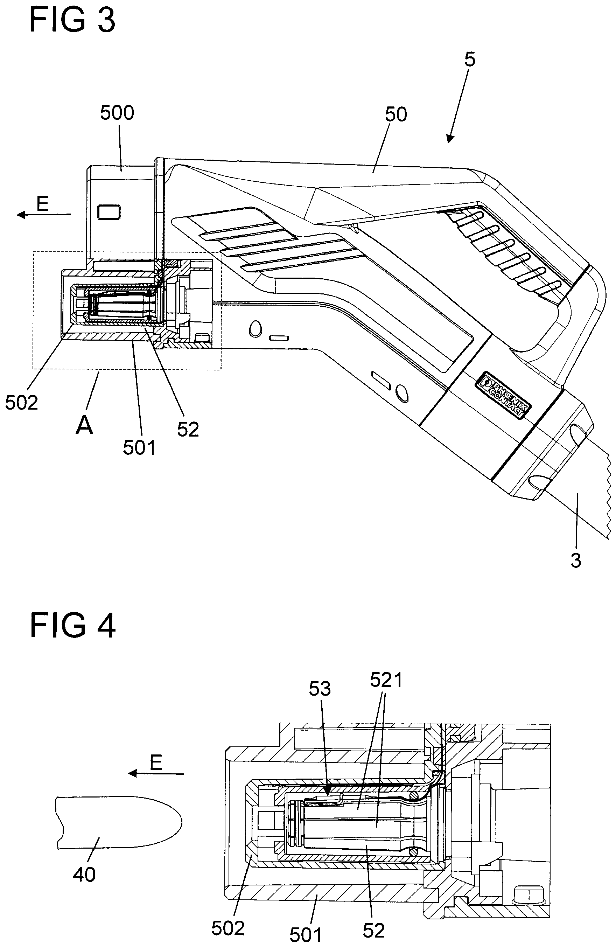

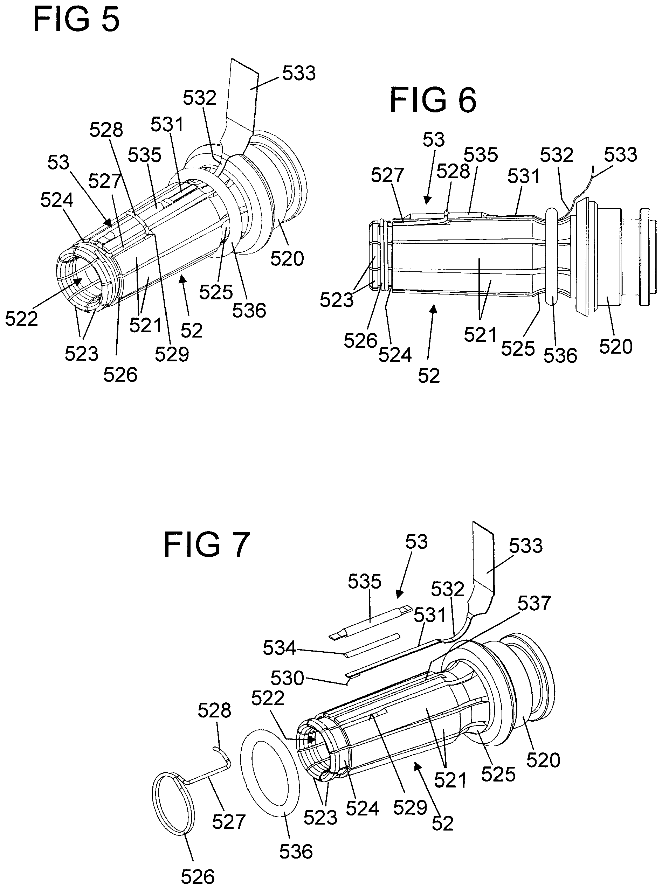

Wie aus der Seitenansicht gemäß Fig. 3 und der vergrößerten Schnittansicht gemäß Fig. 4 in Zusammenschau mit den gesonderten Ansichten eines Kontaktelements 52 gemäß Fig. 5 bis 7 für ein Ausführungsbeispiel ersichtlich ist, liegen die Kontaktelemente 52 mit von einem Schaftabschnitt 520 erstreckten Kontaktlamellen 521 in dem jeweils zugeordneten Steckdom 502 ein. Ein jedes Kontaktelement 52 kann hierbei entlang einer Steckrichtung E mit einem zugeordneten Gegenkontaktelement 40 in Form eines Kontaktstifts (siehe Fig. 4) verbunden werden, indem das Gegenkontaktelement 40 in Form des Kontaktstifts in eine durch die Kontaktlamellen 521 gebildete Stecköffnung 522 eingesteckt und somit innerhalb der Stecköffnung 522 aufgenommen wird.

Die Kontaktlamellen 521 erstrecken sich entlang der Steckrichtung E von dem zylindrischen Schaftabschnitt 520, wobei benachbarte Kontaktlamellen 521 durch jeweils einen Schlitz voneinander getrennt sind. In einem gesteckten Zustand kontaktieren die Kontaktlamellen 521 mit dem Gegenkontaktelement 40, wobei die Kontaktlamellen 521 zumindest geringfügig elastisch auslenkbar sind und in gestecktem Zustand mit einer elastischen Vorspannung (der Kontaktnormalkraft) an dem Gegenkontaktelement 40 anliegen.

Um in gestecktem Zustand eine definierte Kontaktnormalkraft für die Kontaktierung zwischen den Kontaktlamellen 521 und dem als Kontaktstift ausgebildeten Gegenkontaktelement 40 bereitzustellen, ist im Bereich von von dem Schaftabschnitt 520 abliegenden, freien Enden 523 der Kontaktlamellen 521 ein Federelement 526 angeordnet, das aus einem gewundenen Federdraht gefertigt ist und die Kontaktlamellen 521 außenseitig entlang einer um die Steckrichtung E gerichteten Umfangsrichtung umgreift, wie dies beispielsweise aus Fig. 5 und 6 ersichtlich ist.

Das Federelement 526, auch bezeichnet als Überfeder, weist beispielsweise mehr als eine Windung, beispielsweise ca. zwei Windungen, auf und liegt in einer an den Kontaktlamellen 521 geformten, um die Steckrichtung E umlaufenden Nut 524 ein und ist darüber axial an den Kontaktlamellen 521 gehalten. Das Federelement 526 stellt eine radial nach innen gerichtete Vorspannkraft an den Kontaktlamellen 521 zur Verfügung und wirkt dadurch einem Aufweiten der Kontaktlamellen 521 elastisch federnd entgegen, sodass über das Federelement 526 sichergestellt ist, dass die Kontaktlamellen 521 mit hinreichender Vorspannkraft an einem gesteckten Gegenkontaktelement 40 anliegen.

Bei dem in den Figuren dargestellten Ausführungsbeispiel ist an dem Kontaktelement 52 eine Sensoreinrichtung 53 angeordnet, die zum Erfassen einer Messgröße, insbesondere zum Erfassen der Temperatur, an den Kontaktlamellen 521 ausgestaltet ist.

Die Sensoreinrichtung 53 weist, bei dem dargestellten Ausführungsbeispiel, ein Sensorelement 530 zum Beispiel in Form eines temperaturabhängigen Widerstands auf, das an einem Zuleitungselement 531 zum Beispiel in Form einer flexiblen Leiterplatte angeordnet und zusammen mit einem Trägerelement 534 in einem Gehäuse 535 eingefasst ist.

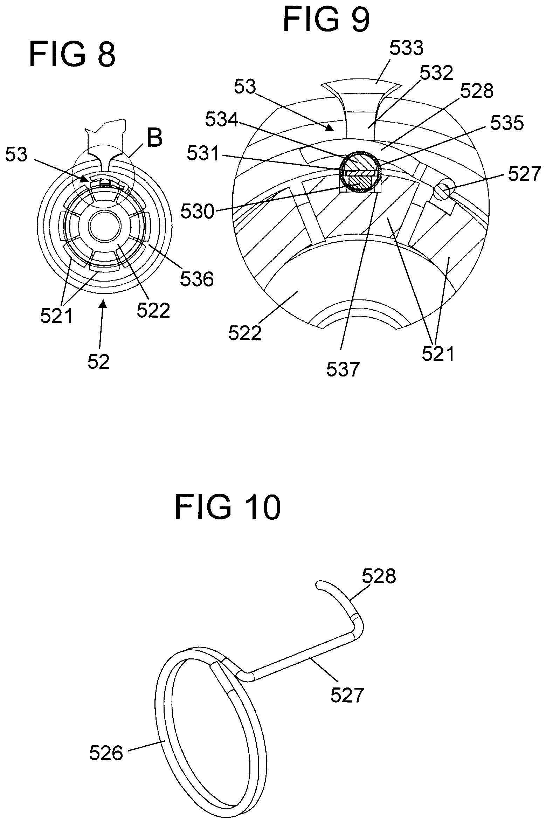

Wie aus Fig. 8 und 9 ersichtlich ist, ist das Sensorelement 530 an einer der zugeordneten Kontaktlamelle 521 zugewandten Seite des Zuleitungselements 531 angeordnet. Das Trägerelement 534 befindet sich demgegenüber an einer der Kontaktlamelle 521 abgewandten Seite des Zuleitungselements 531 und dient der mechanischen Stabilisierung der Sensoreinrichtung 53.

Das Gehäuse 535 fasst das Sensorelement 530, das Zuleitungselement 531 und das Trägerelement 534 umfänglich ein und ist beispielsweise durch einen Folienschlauch geringer Wandungsstärke, zum Beispiel wenige Hundertstel Millimeter, ausgebildet. Das Gehäuse 535 ist hierbei elektrisch isolierend und hinreichend spannungsfest, sodass auch große an dem Kontaktelement 52 anliegende Spannungen nicht zu einem Spannungsüberschlag auf das Sensorelement 530 innerhalb des Gehäuses 535 führen können.

Das Gehäuse 535 ist umfänglich und auch an seinen Enden geschlossen, sodass das Sensorelement 530 innerhalb des Gehäuses 535 feuchtigkeitsdicht eingefasst ist.

Das beispielsweise streifenförmig durch eine flexible Leiterplatte ausgebildete Zuleitungselement 531 ist an einem Ende aus dem Gehäuse 535 herausgeführt, wie dies insbesondere aus Fig. 5 und 6 ersichtlich ist, und dabei gegenüber dem Gehäuse 535 so abgedichtet, dass keine Feuchtigkeit in das Innere des Gehäuses 535 gelangen kann. Das Zuleitungselement 531 liegt mit einem gekrümmten Abschnitt 532 in einer Vertiefung 525 ein, die an den Kontaktlamellen 521 im Bereich von dem Schaftabschnitt 520 zugewandten Enden geformt ist und umfänglich um die Steckrichtung E umläuft, und mündet in einen Anschlussabschnitt 533, über den die Sensoreinrichtung 53 mit einer übergeordneten elektrischen oder elektronischen Baugruppe, beispielsweise einem Signalkontakt 51, zum Zwecke der Temperaturüberwachung verbunden sein kann.

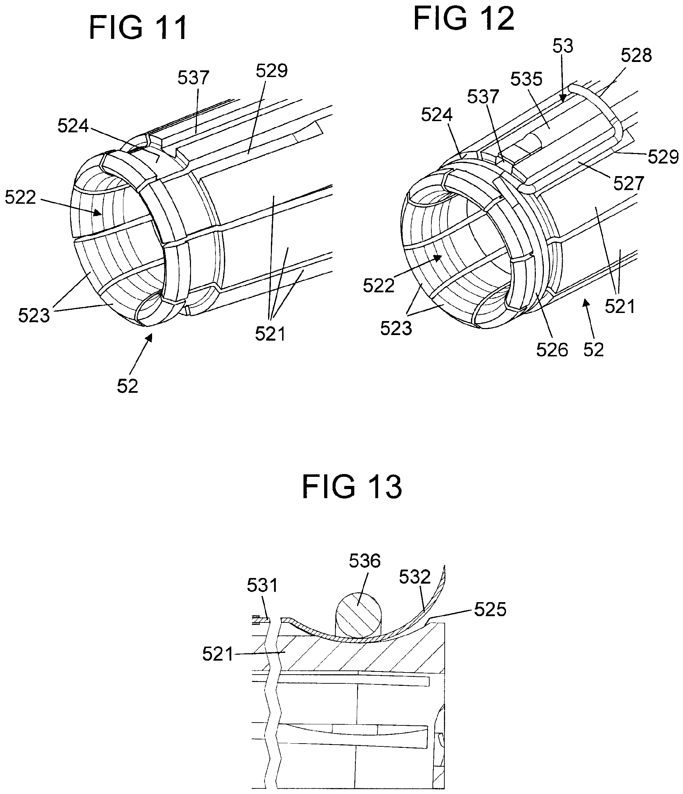

Wie aus Fig. 5 bis 7 in Zusammenschau mit Fig. 13 ersichtlich ist, erstreckt sich im Bereich der Vertiefung 525 ein Fixierungselement 536 um die Kontaktlamellen 521 herum. Das Fixierungselement 536 ist bei dem dargestellten Ausführungsbeispiel durch einen Elastomerring ausgebildet und dient dazu, auf den gekrümmten Abschnitt 532 des Zuleitungselements 531 einzuwirken und dadurch das Zuleitungselement 531 an den Kontaktlamellen 521 zu fixieren.

Die Sensoreinrichtung 53 liegt in einer an einer der Kontaktlamellen 521 geformten, außenseitig der zugeordneten Kontaktlamelle 521 entlang der Steckrichtung E erstreckten Aufnahmenut 537 ein und ist über das Federelement 526 in der Aufnahmenut 537 fixiert und darüber an dem Kontaktelement 52 gehalten. Wie aus Fig. 10 und 12 ersichtlich ist, weist das Federelement 526 einen axial entlang der Steckrichtung E von den Windungen des Federelements 526 vorstehenden Federarm 527 auf, der ein von den Windungen abliegendes, zu dem Federarm 524 abgewinkeltes, gekrümmtes Federende 528 trägt. Wie aus Fig. 11 in Zusammenschau mit Fig. 12 ersichtlich ist, liegt der Federarm 527 in montierter Stellung (Fig. 12) in einer an einer der Kontaktlamellen 521 geformten Aussparung 529 ein und übergreift mit dem Federende 528 die in der Aufnahmenut 537 der zugeordneten Kontaktlamelle 521 einliegende Sensoreinrichtung 53, sodass über das Federelement 528 die Sensoreinrichtung 53 an der zugeordneten Kontaktlamelle 521 fixiert ist. Dadurch, dass der Federarm 527 in der Aussparung 529 einliegt, ist das Federelement 526 umfänglich gegen ein Verdrehen gesichert, sodass insbesondere der Federarm 527 nicht umfänglich verrutschen und das Federende 528 nicht außer Eingriff von der Sensoreinrichtung 53 gelangen kann.

Dadurch, dass das Federende 528 die Sensoreinrichtung 53 außen umgreift und radial auf die Sensoreinrichtung 53 einwirkt, drückt das Federelement 526 mit dem an dem Federarm 527 angeordneten Federende 528 die Sensoreinrichtung 53 elastisch in Anlage mit der zugeordneten Kontaktlamelle 521. Auf diese Weise wird, wie insbesondere aus der vergrößerten Ansicht gemäß Fig. 9 ersichtlich ist, eine Anlage des (thermisch leitfähigen) Gehäuses 535 an der zugeordneten Kontaktlamelle 521 bewirkt und das Sensorelement 530 in Wärmeverbindung mit der Kontaktlamelle 521 gebracht.

Die Sensoreinrichtung 53 ist somit durch das (zudem zur Vorspannung der Kontaktlamellen 521 dienende) Federelement 526 an den Kontaktlamellen 521 fixiert. Bei Auslenkung der Kontaktlamellen 521 bei steckendem Verbinden mit einem Gegenkontaktelement 40 kann die Sensoreinrichtung 53 dabei ungehindert durch den Federarm 527 und das daran angeordnete Federende 528 mitfedern.

Weil die Sensoreinrichtung 53 an einer zugeordneten Aufnahmenut 537 an der Kontaktlamelle 521 einliegt und zudem ein ohnehin vorhandenes Bauelement, nämlich das Federelement 526, zur Fixierung der Sensoreinrichtung 53 an der Kontaktlamelle 521 verwendet wird, erhöht sich der Bauraumbedarf durch die Sensoreinrichtung 53 im Bereich der Kontaktlamellen 521 kaum. Die Sensoreinrichtung 53 kollidiert somit nicht mit dem die Kontaktlamellen 521 aufnehmenden Steckdom 502 (siehe Fig. 3 und 4), sodass unmittelbar an den Kontaktlamellen 521 eine Temperaturüberwachung im Betrieb vorgenommen werden kann.

Der der Erfindung zugrunde liegende Gedanke ist nicht auf die vorangehend geschilderten Ausführungsbeispiele beschränkt, sondern lässt sich auch in anderer Weise verwirklichen.

Eine Sensoreinrichtung kann nach der beschriebenen Art an einem oder an mehreren Kontaktelementen eines Steckverbinderteils angeordnet sein. Vorteilhafterweise kann insbesondere an jedem Kontaktelement, das im Betrieb zum Übertragen von Lastströmen dient, eine Sensoreinrichtung nach der beschriebenen Art angeordnet sein.

Eine Sensoreinrichtung kann zum Erfassen der Temperatur dienen, wobei die Sensoreinrichtung ein Sensorelement beispielsweise in Form eines temperaturabhängigen Widerstands aufweist und somit ein Messsignal erzeugt oder zumindest zur Erzeugung eines Messsignals beiträgt. Grundsätzlich können aber auch andere Messgrößen aufgenommen werden.

Ein Steckverbinderteil der beschriebenen Art kann vorteilhaft zum Aufladen eines Elektrofahrzeugs Verwendung finden, wobei auch andere Anwendungen denkbar und möglich sind.

### Bezugszeichenliste

- 1: Fahrzeug
- 2: Ladestation
- 20: Gegensteckverbinderteil (Ladebuchse)
- 3: Ladekabel
- 4: Gegensteckverbinderteil (Ladebuchse)
- 40: Gegenkontaktelement
- 5, 6: Steckverbinderteil (Ladestecker)
- 50: Gehäuse
- 500, 501: Steckabschnitt
- 502: Steckdome
- 51: Kontaktelement (Signalkontakt)
- 52: Kontaktelement (Lastkontakt)
- 520: Schaftabschnitt
- 521: Kontaktlamellen
- 522: Stecköffnung
- 523: Enden
- 524: Nut
- 525: Vertiefung
- 526: Federelement (Überfeder)
- 527: Federarm
- 528: Ende
- 529: Aussparung
- 53: Sensoreinrichtung
- 530: Sensorelement
- 531: Zuleitungselement
- 532: Gekrümmter Abschnitt
- 533: Anschlussabschnitt
- 534: Trägerelement
- 535: Gehäuse
- 536: Fixierungselement
- 537: Aufnahmenut
- E: Steckrichtung

## Patentansprüche

1. Steckverbinderteil (5) zum Aufladen eines elektrisch betriebenen Fahrzeugs, mit zumindest einem elektrischen Kontaktelement (52), das entlang einer Steckrichtung (E) mit einem Gegenkontaktelement (40) eines Gegensteckverbinderteils (4) verbindbar ist und eine Mehrzahl von um eine Stecköffnung (522) zum Aufnehmen des Gegenkontaktelements (40) gruppierten Kontaktlamellen (521) aufweist, und einem an den Kontaktlamellen (521) angeordneten Federelement (526), das die Kontaktlamellen (521) zum Bereitstellen einer mechanischen Vorspannung umfänglich um die Steckrichtung (E) zumindest abschnittsweise umgreift, **gekennzeichnet durch** eine Sensoreinrichtung (53) zum Erfassen einer Messgröße, die an zumindest einer der Kontaktlamellen (521) angeordnet und durch das Federelement (526) an der zumindest einen der Kontaktlamellen (521) gehalten ist.

2. Steckverbinderteil (5) nach Anspruch 1, **dadurch gekennzeichnet, dass** das Federelement (526) eine radial zur Steckrichtung (E) nach innen gerichtete Vorspannkraft auf die Sensoreinrichtung (53) ausübt.

3. Steckverbinderteil (5) nach Anspruch 1 oder 2, **dadurch gekennzeichnet, dass** das Federelement (526) in einer an den Kontaktlamellen (521) geformten, umfänglich um die Kontaktlamellen (521) umlaufenden Nut (524) einliegt.

4. Steckverbinderteil (5) nach einem der Ansprüche 1 bis 3, **dadurch gekennzeichnet, dass** das Federelement (526) zumindest eine Windung aufweist, die umfänglich um die Kontaktlamellen (521) gewunden ist.

5. Steckverbinderteil (5) nach Anspruch 4, **dadurch gekennzeichnet, dass** das Federelement (526) einen von der zumindest einen Windung erstreckten Federarm (527) und ein an den Federarm (527) anschließendes Federende (528) aufweist, wobei das Federende (528) auf die Sensoreinrichtung (53) einwirkt.

6. Steckverbinderteil (5) nach Anspruch 5, **dadurch gekennzeichnet, dass** der Federarm (527) in einer an einer der Kontaktlamellen (521) geformten, längs entlang der Steckrichtung (E) erstreckten Aussparung (529) einliegt.

7. Steckverbinderteil (5) nach einem der vorangehenden Ansprüche, **dadurch gekennzeichnet, dass** an der zumindest einen der Kontaktlamellen (521) eine längs entlang der Steckrichtung (E) erstreckte Aufnahmenut (537) geformt ist, in der die Sensoreinrichtung (53) einliegt.

8. Steckverbinderteil (5) nach einem der vorangehenden Ansprüche, **dadurch gekennzeichnet, dass** die Sensoreinrichtung (53) ein Sensorelement (530) und ein das Sensorelement (530) einfassendes, elektrisch isolierendes Gehäuse (535) aufweist.

9. Steckverbinderteil (5) nach Anspruch 8, **dadurch gekennzeichnet, dass** das Gehäuse (535) durch einen Folienschlauch geformt ist.

10. Steckverbinderteil (5) nach Anspruch 8 oder 9, **dadurch gekennzeichnet, dass** die Sensoreinrichtung (53) ein Zuleitungselement (531) aufweist, an der das Sensorelement (530) angeordnet und die entlang der Steckrichtung (E) aus dem Gehäuse (535) herausgeführt ist.

11. Steckverbinderteil (5) nach Anspruch 10, **dadurch gekennzeichnet, dass** das Zuleitungselement (531) durch eine flexible Leiterplatte gebildet ist.

12. Steckverbinderteil (5) nach Anspruch 10 oder 11, **dadurch gekennzeichnet, dass** die Sensoreinrichtung (53) ein Trägerelement (534) aufweist, das in dem Gehäuse (535) eingefasst und an einer dem Sensorelement (530) abgewandten Seite des Zuleitungselements (531) angeordnet ist.

13. Steckverbinderteil (5) nach einem der Ansprüche 10 bis 12, **gekennzeichnet durch** ein an dem zumindest einen Kontaktelement (52) angeordnetes Fixierungselement (536), das die Kontaktlamellen (521) umgreift und das Zuleitungselement (531) an den Kontaktlamellen (521) fixiert.

14. Steckverbinderteil (5) nach einem der Ansprüche 10 bis 13, **dadurch gekennzeichnet, dass** das Zuleitungselement (531) einen gekrümmten Abschnitt (532) aufweist, der in einer an den Kontaktlamellen (521) geformten, um die Steckrichtung (E) umlaufenden Vertiefung (525) einliegt.

## Claims

1. Plug-in connector part (5) for charging an electrically operated vehicle, comprising at least one electrical contact element (52) which can be connected to a mating contact element (40) of a mating plug-in connector part (4) along a plug-in direction (E), and a plurality of contact lamellae (521) grouped around a plug-in opening (522) for receiving the mating contact element (40), and a spring element (526) which is arranged on the contact lamellae (521) and at least in portions engages circumferentially around the plug-in direction (E) around the contact lamellae (521) in order to provide mechanical pretensioning, **characterized by** a sensor device (53) for detecting a measurement variable, which sensor device is arranged on at least one of the contact lamellae (521) and is held on the at least one of the contact lamellae (521) by the spring element (526) .

2. Plug-in connector part (5) according to Claim 1, **characterized in that** the spring element (526) exerts a pretensioning force directed inward radially in relation to the plug-in direction (E) onto the sensor device (53).

3. Plug-in connector part (5) according to Claim 1 or 2, **characterized in that** the spring element (526) is situated in a groove (524) formed on the contact lamellae (521) and encircling circumferentially around the contact lamellae (521).

4. Plug-in connector part (5) according to one of Claims 1 to 3, **characterized in that** the spring element (526) has at least one turn which is wound circumferentially around the contact lamellae (521).

5. Plug-in connector part (5) according to Claim 4, **characterized in that** the spring element (526) has a spring arm (527), which extends from the at least one turn, and a spring end (528), which adjoins the spring arm (527), wherein the spring end (528) acts on the sensor device (53).

6. Plug-in connector part (5) according to Claim 5, **characterized in that** the spring arm (527) is situated in a cutout (529) which is formed on one of the contact lamellae (521) and extends longitudinally along the plug-in direction (E).

7. Plug-in connector part (5) according to one of the preceding claims, **characterized in that** a receiving groove (537), which extends longitudinally along the plug-in direction (E) and in which the sensor device (53) is situated, is formed on the at least one of the contact lamellae (521).

8. Plug-in connector part (5) according to one of the preceding claims, **characterized in that** the sensor device (53) has a sensor element (530) and an electrically insulating housing (535) which surrounds the sensor element (530).

9. Plug-in connector part (5) according to Claim 8, **characterized in that** the housing (535) is formed by a film tube.

10. Plug-in connector part (5) according to Claim 8 or 9, **characterized in that** the sensor device (53) has a supply line element (531) on which the sensor element (530) is arranged and which is guided out of the housing (535) along the plug-in direction (E).

11. Plug-in connector part (5) according to Claim 10, **characterized in that** the supply line element (531) is formed by a flexible printed circuit board.

12. Plug-in connector part (5) according to Claim 10 or 11, **characterized in that** the sensor device (53) has a carrier element (534) which is surrounded in the housing (535) and is arranged on a side of the supply line element (531) that faces away from the sensor element (530).

13. Plug-in connector part (5) according to one of Claims 10 to 12, **characterized by** a fixing element (536) which is arranged on the at least one contact element (52), engages around the contact lamellae (521) and fixes the supply line element (531) to the contact lamellae (521) .

14. Plug-in connector part (5) according to one of Claims 10 to 13, **characterized in that** the supply line element (531) has a curved portion (532) which is situated in a recess (525) which is formed on the contact lamellae (521) and runs around the insertion direction (E) .

## Revendications

1. Pièce de connecteur enfichable (5) permettant de recharger un véhicule électrique,
comprenant au moins un élément de contact électrique (52) qui peut être relié le long d'une direction d'enfichage (E) à un élément de contact complémentaire (40) d'une pièce de connecteur enfichable complémentaire (4) et présente une pluralité de lamelles de contact (521) regroupées autour d'une ouverture d'enfichage (522) pour recevoir l'élément de contact complémentaire (40), et un élément faisant ressort (526) disposé au niveau des lamelles de contact (521) qui enserre les lamelles de contact (521) pour fournir au moins par endroits une précontrainte mécanique de manière circonférentielle autour de la direction d'enfichage (E),
**caractérisée par** un dispositif capteur (53) permettant de détecter une grandeur de mesure, qui est disposé au niveau d'au moins l'une des lamelles de contact (521) et est maintenu par l'élément faisant ressort (526) au niveau de ladite au moins une des lamelles de contact (521).

2. Pièce de connecteur enfichable (5) selon la revendication 1, **caractérisée en ce que** l'élément faisant ressort (526) exerce sur le dispositif capteur (53) une force de précontrainte dirigée radialement vers l'intérieur par rapport à la direction d'enfichage (E) .

3. Pièce de connecteur enfichable (5) selon la revendication 1 ou 2, **caractérisée en ce que** l'élément faisant ressort (526) repose dans une rainure (524) formée au niveau des lamelles de contact (521) et s'étendant de manière circonférentielle autour des lamelles de contact (521).

4. Pièce de connecteur enfichable (5) selon l'une quelconque des revendications 1 à 3, **caractérisée en ce que** l'élément faisant ressort (526) présente au moins une spire qui est enroulée de manière circonférentielle autour des lamelles de contact (521).

5. Pièce de connecteur enfichable (5) selon la revendication 4, **caractérisée en ce que** l'élément faisant ressort (526) présente un bras de ressort (527) s'étendant à partir de ladite au moins une spire et une extrémité de ressort (528) consécutive au bras de ressort (527), l'extrémité de ressort (528) agissant sur le dispositif capteur (53).

6. Pièce de connecteur enfichable (5) selon la revendication 5, **caractérisée en ce que** le bras de ressort (527) repose dans un évidement (529) formé au niveau d'une des lamelles de contact (521), s'étendant dans le sens longitudinal le long de la direction d'enfichage (E).

7. Pièce de connecteur enfichable (5) selon l'une quelconque des revendications précédentes, **caractérisée en ce qu'**au niveau de ladite au moins une des lamelles de contact (521) est formée une rainure de réception (537) s'étendant le long de la direction d'enfichage (E) dans laquelle repose le dispositif capteur (53).

8. Pièce de connecteur enfichable (5) selon l'une quelconque des revendications précédentes, **caractérisée en ce que** le dispositif capteur (53) présente un élément capteur (530) et un boîtier (535) électriquement isolant, enserrant l'élément capteur (530) .

9. Pièce de connecteur enfichable (5) selon la revendication 8, **caractérisée en ce que** le boîtier (535) est formé par un film tubulaire.

10. Pièce de connecteur enfichable (5) selon la revendication 8 ou 9, **caractérisée en ce que** le dispositif capteur (53) présente un élément d'alimentation (531) sur lequel est disposé l'élément capteur (530) et qui sort du boîtier (535) le long de la direction d'enfichage (E).

11. Pièce de connecteur enfichable (5) selon la revendication 10, **caractérisée en ce que** l'élément d'alimentation (531) est formé par une carte de circuits imprimés flexible.

12. Pièce de connecteur enfichable (5) selon la revendication 10 ou 11, **caractérisée en ce que** le dispositif capteur (53) présente un élément porteur (534) qui est enserré dans le boîtier (535) et est disposé sur une face, détournée de l'élément capteur (530), de l'élément d'alimentation (531).

13. Pièce de connecteur enfichable (5) selon l'une quelconque des revendications 10 à 12, **caractérisée par** un élément de fixation (536) disposé au niveau dudit au moins un élément de contact (52) qui entoure les lamelles de contact (521) et fixe l'élément d'alimentation (531) aux lamelles de contact (521).

14. Pièce de connecteur enfichable (5) selon l'une quelconque des revendications 10 à 13, **caractérisée en ce que** l'élément d'alimentation (531) présente une section courbe (532) qui repose dans un creux (525) formé au niveau des lamelles de contact (521) et s'étendant autour de la direction d'enfichage (E).
